# EUROPEAN PATENT SPECIFICATION

(11) **EP 0 331 725 B1**
(45) Date of publication and mention of the grant of the patent: **28.12.1994**
(21) Application number: 88909168.2
(22) Date of filing: 30.08.1988
(51) Int. Cl.: H01S 3/225

(54) **RARE GAS-HALOGEN EXCIMER LASER**
EDELGAS-HALOGEN EXCIMER-LASER
LASER EXCIMER A HALOGENE-GAZ RARE

(30) Priority: 31.08.1987 US 91383
(43) Date of publication of application: 13.09.1989
(73) Proprietor: ACCULASE, INC., San Diego, CA 92121 (US)
(72) Inventor: LEVATTER, Jeffrey, I., San Diego, CA 92121 (US)
(74) Representative: Enskat, Michael Antony Frank
(86) International application number: US8802995
(87) International publication number: WO8902176

(56) References cited:
- US-A- 4 099 143
- US-A- 4 380 097
- US-A- 4 521 730
- US-A- 4 562 597
- US-A- 4 611 327
- US-A- 4 718 072
- US-A- 4 719 641

## Description

### BACKGROUND OF THE INVENTION

### 1. Field of the Invention.

The present invention relates to improvements in rare gas-halogen lasers, and in particular, to improvements which increase the length of time, reliability and efficiency with which such lasers operate.

### 2. Background.

An excimer laser uses a rare gas such as krypton, xenon, argon or neon, and a halide gas or a gas containing a halide, for example F₂ or GCl, as the active components. The active components and other gases are contained in a pressure vessel provided with laser optics at each end and longitudinally extending lasing electrodes for causing a transverse electrical discharge in the gases. The discharge causes the formation of excited rare gas-halide molecules whose disassociation causes the emission of ultraviolet photons constituting the laser light. The laser gases are circulated between the lasing electrodes by a fan and cooled by a heat exchanger within the pressure vessel.

Excimer lasers emit pulses of ultraviolet laser radiation and have potentially many practical applications in medicine, industry and communications. This potential has remained to the most extent unfulfilled because of a number of problems that limit the length of time excimer lasers will operate without substantial maintenance or problems.

One of the problems encountered in efforts to achieve a practical excimer laser is the difficulty of obtaining a homogenous volumetric discharge between the longitudinally extending lasing electrodes. Inhomogenous arcing between the electrodes causes their eventual destruction as well as contamination of the laser gases and optics with sputtered electrode material.

In order to overcome this difficulty, pre-ionization of the gas volume has been provided. This pre-ionization creates a low level electron cloud prior to the laser-exciting electrical discharge, and results in a homogenous discharge. One type of pre-ionizer uses a non-solid, perforated, metallic longitudinally extending electrode separated from a co-axial ground electrode by an insulator. The pre-ionizer electrodes are co-axially situated within one of the lasing electrodes, which is made of conductive screen or mesh. The voltage applied to the pre-ionizer electrodes creates a plasma around the pre-ionizer electrodes which produces ultraviolet radiation. The ultraviolet radiation passes through the screen of the surrounding longitudinally lasing electrode to the area between the lasing electrodes and ionizes a portion of the gas there, allowing for a homogenous discharge when an electric pulse is applied to the lasing electrodes. These additional components within the laser cavity are potential sources of contamination of the laser gases. Contamination of the laser gases during the operation of an excimer laser quenches the laser action.

Contamination of the laser gases or the optics in the pressure vessel require that major maintenance and/or disassembly of the laser take place. Prior to the present invention, the lifetime of excimer lasers was on the order of a few tens of millions of pulses. It will be readily appreciated that at typical pulse rates between 10 and 500 pulses per second, the operating time between such maintenance procedures or disassembly is on the order of hours, rendering such excimer lasers impractical for many, if not most, applications. In addition, because toxic and corrosive gases used in excimer lasers must be carefully handled during disassembly of the laser and subsequent reassembly, such procedures are neither simple nor nonhazardous.

It is recognized by the present invention that contamination in excimer lasers arises from hydrocarbons; water vapour, fluorocarbons and other organic molecules and impurities and that the sources of such contaminants are many and varied. For example, the use of plastic supports for the longitudinal electrodes or as electrical insulators in the pressure vessel permits hydrocarbons and other molecules therein to contaminate the laser gases. Many parts in present day excimer lasers are either made of Teflon (Registered Trade Mark) or have a Teflon coating on them or are made of epoxy resins, polyvinyl chloride, or other plastic materials. Teflon is perhaps the best of such materials because it is relatively inert to the corrosive effects of halogens while also being an electrical insulator. However, even Teflon and all the other plastic materials contaminate the excimer laser gases by virtue of the presence of hydrocarbon and/or fluorocarbon molecular structures. In addition to quenching the laser action, fluorocarbon or hydrocarbon molecular structures may be dissociated by ultraviolet radiation emitted from the gas discharge causing carbon or hydrocarbons to be deposited on the laser optics, which eventually destroy the laser output.

Another source of contamination arises from the use of a fan within the pressure vessel to circulate the laser gases. In particular, fluorocarbon grease or other lubricant used in connection with the bearings upon which the shaft of the fan rotates is a source of contaminants. The use of dry bearings for the fan shaft is not satisfactory as dry bearings have not proved to be sufficiently long-lived so as to be practical.

Additional problems arise from water vapor that may be introduced into the pressure vessel. The halide gases in the laser system form inherent metallic halides on the electrode surfaces. Water vapor from the air may gain entry into the pressure vessel as a result of maintenance procedures that take place after the laser gases are contaminated or the optics degraded. The metallic halides in the pressure vessel react with the water vapor to form highly corrosive compositions. For example, nickel fluoride or nickel chloride react with water vapor to form hydrofluoric acid or hydrochloric acid, respectively, which are corrosive substances that seriously degrade the materials used for the optical windows in the presssure vessel, e.g., quartz, calcium fluoride or magnesium fluoride.

Contamination within the pressure vessel, whether it is contamination of the laser gases which tends to quench the laser action or is contamination of the optical windows on the pressure vessel, results in impractically short operating times between maintenance procedures. These maintenance procedures, which may involve changing the gases in the pressure vessel and cleaning and/or replacing the optical and other components in the pressure vessel are time consuming and costly. During the time that such procedures are taking place, the excimer laser is not available for use. In addition, the halogen gases used in excimer lasers and other gases that might be formed from impurities are highly toxic. When such gases have to be handled, such as during maintenance procedures, the possibility of their escape into the surrounding atmosphere is a safety hazard. The safety hazard is particularly critical if the excimer laser is utilized in medical procedures and is being serviced proximate to where such procedures take place.

### SUMMARY OF THE INVENTION

An excimer laser corresponding to the preamble of claim 1 is known from US-A-4 611 327.

It is a primary object of the present invention to provide an excimer laser that is capable of reliable operation over a longer period of time than has heretofore been achieved, and thereby to provide an excimer laser that is practical as well as safe for use in applications in medicine, industry, communications and other areas. In order to achieve this object, it is another object of the present invention to provide an excimer laser in which the contamination of laser gases and optics characteristics of prior excimer lasers is markedly reduced.

These and other objects of the present invention are achieved in an excimer laser which provides an environment for the laser gases in which virtually only metal and ceramic are exposed to the laser gases. The excimer laser of the present invention is defined in Claim 1. The method of the present invention for using an excimer laser is defined in claim 9. Embodiments are set out in the dependent claims. By restricting the access of the laser gases to virtually only metal and ceramic, contamination resulting from hydrocarbons, fluorocarbons and other organic materials that can quench the laser action or degrade the optics is eliminated or almost entirely eliminated. The preferred metal to which the laser gases are exposed in the present invention is nickel, while the preferred ceramic is presently high purity alumina (Al₂O₃).

In the present invention, the use of Teflon and similar materials is avoided. The insulating support for the high voltage discharge electrode in the pressure vessel is fabricated of ceramic, rather than Teflon or plastic. Similarly, a corona pre-ionizer uses a ceramic insulator between its high voltage and ground electrodes. A preferred embodiment implements a novel arrangement of the components used to rotate the fan within the pressure vessel of the laser, whereby contamination of the laser gases from the fan shaft bearings is avoided without increasing the risk of leakage of toxic laser gases into the environment. The fan employs magnetic fluid seals to isolate the bearings supporting the fan shaft from the inside of the pressure vessel containing the laser gases. The bearings and any lubrication on them do not come in contact with the laser gases. An enclosure surrounds the bearing at the end of the shaft outside of the pressure vessel as well as the side of the magnetic fluid seal facing the bearing in order to contain laser gases that might leak through the seal in the event that seal should fail. A magnetic coupling comprising an inner magnetic coupling portion on the fan shaft inside the enclosure and an outer magnetic coupling portion on a separate driven shaft coaxial with the fan shaft exterior to the enclosure is used to operate the fan. By proper implementation of this enclosure, leakage of toxic gases into the environment may be prevented in the event that the magnetic fluid seal fails with a margin of safety sufficient to meet the standards necessary for use not only industrial, but also medical applications.

The present invention also greatly reduces the frequency with which the interior surfaces of the optical windows of the pressure vessel must be serviced or replaced. Such servicing or replacement requires at least partial disassembly of the laser and in addition to being inefficient because of the unavailability of the excimer laser during such period and the labor involved in servicing or replacing the windows, is hazardous because of the handling of toxic gases necessary prior to such disassembly and after reassembly of the excimer laser. To achieve a reduction in frequency of servicing or replacement of the windows, the present invention provides oversized windows in rotatable mounts. The windows are mounted so that the laser beam impinges and traverses the window through a portion of the window separated from the center of rotation of the window in its mount. The degradation resulting to windows used in excimer lasers from contamination occurs mainly where the beam impinges upon the window and is primarily due to photodecomposition and photoactivated surface attachment of hydrocarbons or fluorocarbons. When the portion of the window impinged upon by the laser beam has degraded to an extent sufficient to interfere with the desired operation of the excimer laser, the mount is rotated so that a portion of the window not previously exposed to the excimer laser beam, and thereby not degraded, is exposed to the laser beam. Depending on the relative placements and sizes of the beam and the rotatable window, an increase of nearly an order of magnitude in the service life of the windows before disassembly and reassembly of the excimer laser becomes necessary is provided by the inclusion of this feature.

### BRIEF DESCRIPTION OF THE DRAWINGS

FIGURE 1 is a schematic, lengthwise sectional view of a preferred embodiment of an excimer laser according to the present invention.

FIGURE 2 is a schematic, cross-sectional view of the excimer laser shown in FIGURE 1 taken along the lines 2-2 of FIGURE 1.

FIGURE 3 is a perspective view of a preferred embodiment of a pre-ionizer of the present invention.

FIGURE 4 is a sectional view of the magnetic fluid seal land bearing for the fan shaft of the excimer laser of FIGURE 1 and the magnetic drive components used to rotate the fan.

FIGURE 5 is a plan view of a preferred embodiment of a window assembly for an excimer laser.

FIGURE 6 is a cross-sectional view of the preferred embodiment of the window assembly shown in FIGURE 5 taken along the lines 6-6 in FIGURE 5.

### DESCRIPTION OF THE INVENTION

The following description of preferred embodiments of the present invention is presented for purposes of illustrating the principles of the present invention, and should not be taken in a limiting sense.

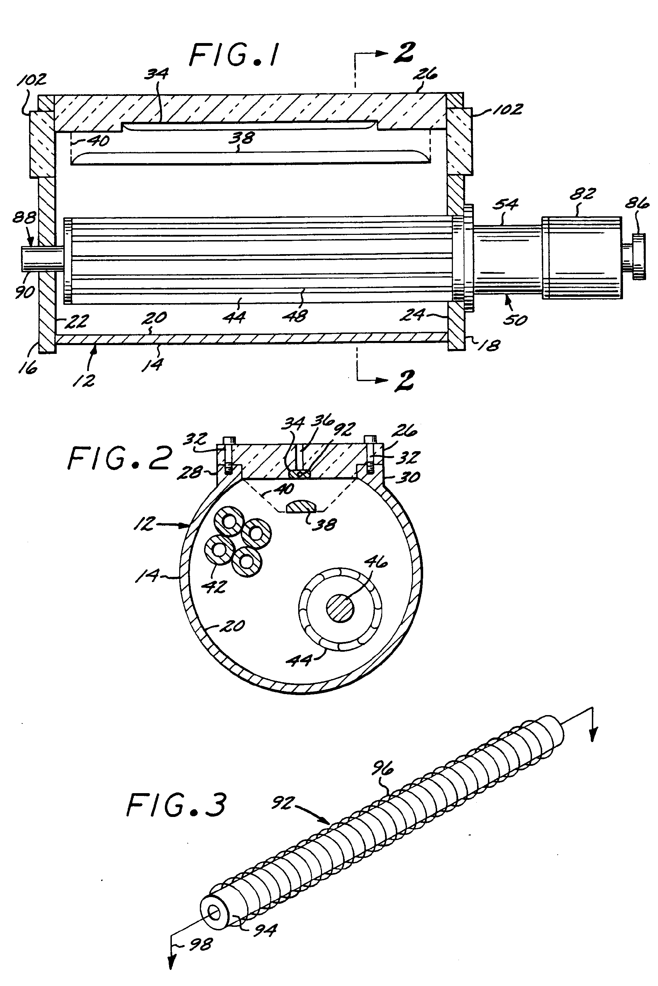

Referring first to FIGURES 1 and 2, the excimer laser of the present invention provides a pressure vessel 12 for containing the laser gases and components of an excimer laser. Pressure vessel 12 is formed of a partially cylindrical longitudinal member 14 to which are attached first and second end plates 16 and 18. Longitudinal member 14 and end plates 16 and 18 are, in the presently preferred embodiment, nickel-plated on their inside surface, i.e., surface 20 of longitudinal member 14 and surfaces 22 and 24 of the first and second end plates 16 and 18, respectively, are formed of nickel. End plates 16 and 18 are attached to longitudinal member 14 in any convenient manner which allows only nickel portions or nickel-plated portions of the end plates 16 and 18 and the member 14 to be exposed to the inside of the pressure vessel 12. Suitable openings and feed-throughs for various purposes, some of which will be described herein, are provided in end plates 16 and 18.

A ceramic cap member 26 is bolted to flanges 28 and 30 provided along the longitudinal edges of longitudinal member 14 with bolts 32 to complete the pressure vessel 12. These components, the partially cylindrical longitudinal member 14, end plates 16 and 18 and the ceramic cap member 26 are configured and fitted together so that the pressure vessel 12 forms a container capable of holding the gases necessary for an excimer laser, which may be at a pressure between two and five atmospheres, in a safe manner. As mentioned, a rare gas and a halide gas or a gas containing a halide are used in an excimer laser. In addition, other gases are employed, for example, helium is a gas that is also used with the other gases in an excimer laser. The various openings and feed-throughs in the end plates 16 and 18 and the ceramic cap member 26, are, of course, utilized in such a manner that the requisite pressures can be maintained within the pressure vessel 12 with an adequate, applicable margin of safety. While the pressure vessel 12 may assume various configurations, in the present invention, the laser gases in the pressure vessel 12 are exposed virtually only to metal, preferably nickel, and ceramic, preferably high purity alumina.

The ceramic cap member 26 serves as a support for a first laser discharge electrode 34 and insulates the first discharge electrode 34 from longitudinal member 14 of the pressure vessel 12 which is grounded. Feed-throughs 36 are provided in ceramic cap member 26 to electrically connect a high voltage power source external to pressure vessel 12 to the first laser discharge electrode 34. The first discharge electrode 34 is preferably made of a metal mesh or screen, for purposes explained below with respect to a pre-ionizer structure 92. The second laser discharge electrode 38 is supported in pressure vessel 12 by a ceramic spacer so as to be separated from the first discharge electrode 34, the space between first and second laser discharge electrodes 34 and 38 defining the area in pressure vessel 12 where lasing action occurs. The second laser discharge electrode 38 is grounded to the pressure vessel 12 by means of a current return screen 40. The first and second laser discharge electrodes 34 and 38 and the current return screen 40 may themselves be similar to those used in prior art excimer lasers.

Because the gases of an excimer laser become heated during the lasing action, a heat exchanger 42 is provided in the pressure vessel 12, as shown in FIGURE 2. Heat exchanger 42 extends along the length of the pressure vessel 12, but is omitted for simplicity from FIGURE 1. The surface of the portions of heat exchanger 42 in contact with the laser gases in pressure vessel 12 are metal, preferably nickel. Heat exchanger 42 may be similar in design and configuration to heat exchangers presently used in excimer lasers.

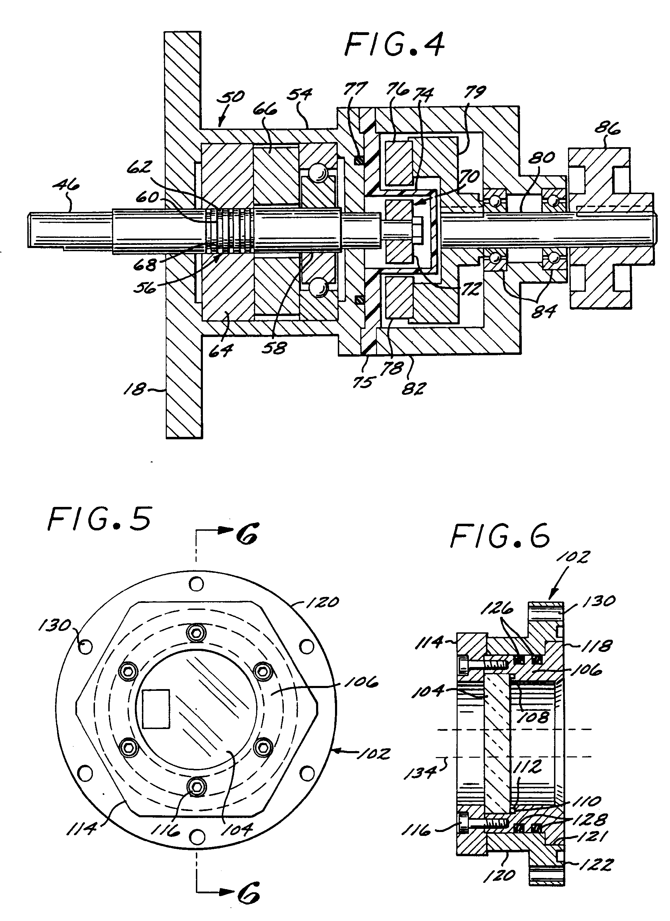

The laser gases are circulated through the pressure vessel 12 by a tangential fan 44 supported by a fan shaft 46. The portions of tangential fan 44 and fan shaft 46 in contact with the laser gases are metal, preferably nickel, or ceramic, preferably high purity alumina. The blades 48 of tangential fan 44 are located around shaft 46 as in tangential fans previously used with excimer lasers. Unlike tangential fans previously used, however, tangential fan 44 is provided with bearings and a drive mechanism for the fan shaft 46 that are isolated from the laser gases in the pressure vessel 12 and therefore cannot contaminate the gases. Referring to FIGURE 4, a magnetic fluid seal assembly 50 and a magnetic drive assembly are shown in a preferred embodiment. The magnetic fluid seal assembly 50 comprises a housing 54 which contains the magnetic fluid seal 56 and bearing 58. The bearing 58 is supported by housing 54 and in turn rotatably supports the fan shaft 46. The portion of the fan shaft 46 within the magnetic fluid assembly 50 is actually a specially machined shaft which is attached within pressure vessel 12 coaxially to the portion of the shaft that rotates the fan 44. For ease of description and in the claims, contiguous coaxial shaft portions will not be differentiated and will be referred to as a single shaft and may be a single shaft.

The magnetic fluid seal 56 is located in the housing 54 between the bearing 58 and the pressure vessel 12 and utilizes a section 60 of fan shaft 46 having spaced circumferential grooves 62. Adjacent the section 60 but not in contact with it is located an annular pole piece 64 whose outer circumference is sealed to the inside of the housing 54. Permanent magnet 66 also annularly disposed around shaft 46 is located immediately adjacent pole piece 64. A fluid 58 containing microscopic-sized particles of magnetic material is disposed in the areas of the grooves 62 between the section 60 of the shaft 46 and the pole piece 64. Fluid 68 is contained in the area of section 60 by the action of the permanent magnet 66 on the pole piece 64 holding the magnetic fluid 68 by magnetic force. The magnetic fluid 68 forms a fluid seal between the shaft 46 and the pole piece 64 at section 60. Magnetic fluid seals of this type are well known land further details of their construction and operation are readily available. Seals of this type, for example, are marketed as Ferrofluidic seals by Ferrofluidic Corporation of Nashua, New Hampshire. Such seals can conventionally withstand pressure differentials of on the order of 60 psi.

The bearing 58 is located adjacent permanent magnet 66, and, as it is sealed form the laser gases in the pressure vessel 12 by the magnetic fluid seal 56, may employ lubrication without the hazard of the lubrication contaminating the laser gases in the pressure vessel 12.

The end of the shaft 46 extends beyond the bearing 58 and beyond the end of the housing 54 through an opening therein in order to accommodate a portion of the magnetic drive assembly attached thereto. An inner magnetic coupling 70 comprises a circular array of magnets 72 with adjacent magnets 72 being of alternate polarities. A pressure cap 74 made of non-magnetically shielding material is placed over the magnetic coupling 70 and sealingly attached along flange 75 to the housing 54 with the assistance of an O-ring 77. The inside pressure cap 74 is in fluid communication with the inside of housing 54 on the bearing 58 side of the magnetic fluid seal 56, and is attached to housing 54 so as to be able to withstand internal pressures equal to several times the pressures normally achieved by the laser gases in the pressure vessel 12. In the event that the magnetic fluid seal 56 fails and toxic laser gases are thereby introduced into the side of the seal housing 54 on which the bearing 58 is located, such toxic laser gases will be contained by the pressure cap 74 with a margin of safety that may be required by applicable safety standards.

A corresponding outer magnetic coupling 76 comprising a larger diameter circular array of magnets 78 of alternate polarities is located concentric to the inner magnetic coupling 70 and in magnetic flux-coupling proximity thereto, but outside of pressure cap 74. Magnetic couplings of this type herein described have previously been known and further aspects of their construction will be omitted. Outer magnetic coupling 76 is attached by suitable annular member 79 to a shaft 80 external to the pressure cap 74, but coaxial with fan shaft 46. A magnetic drive housing 82 attached to the flange 75 of the pressure cap 74 and the seal housing 54 protects the outer magnetic coupling 76 from dirt and dust and also supports bearings 84 in which the shaft 80 rotates. A pulley 86 attached to shaft 80 is used to connect the shaft 80 to a means for rotating the shaft, such as a motor. It will be appreciated that as shaft 80 is rotated, thereby rotating the outer magnetic coupling 76, the rotation of the outer magnetic couplings 76 causes the inner magnetic coupling 70 to also be rotated, thereby rotating the fan shaft 46 and the fan 44.

At the opposite end of the tangential fan 44 is located a second magnetic fluid seal assembly 88, indicated in FIG. 1. The second magnetic fluid seal assembly 88 comprises a seal housing 90 that contains a bearing and a magnetic fluid seal around the end of the fan shaft 46 of a construction similar to that described with respect to the first magnetic fluid seal assembly 50. However, as that end of the fan shaft 46 need not be driven, the fan shaft 46 may terminate within the seal housing 90, thereby eliminating the need for a separate pressure cap such as pressure cap 74 used in connection with the first magnetic fluid seal assembly 50. The second magnetic fluid seal assembly 88 is, in the preferred embodiment, physically smaller than the first magnetic fluid seal assembly 50.

The preferred embodiment of the present invention uses a corona pre-ionizer 92 in order to generate the low level electron cloud between the first and second discharge electrodes, 34, 38, which is desirable for insuring a homogenous discharge in the excimer laser. The corona pre-ionizer 92, in the preferred embodiment, is located within the first laser discharge electrode 34, which as noted previously is preferably made of mesh or screen to permit the electron cloud formed by the pre-ionizer 92 to be generated between the discharge electrodes. The structure of the pre-ionizer is shown more particularly in FIGURE 3. The corona pre-ionizer 92 comprises a tubular ceramic insulator 94 which extends the length of the first laser discharge electrode 34. Preferably, the tubular ceramic insulator 94 is fabricated of high purity alumina. A helical wire 96 wrapped about the tubular ceramic insulator 94 service as a high voltage electrode for the pre-ionizer 92. The wire 98 along the bore 100 of the tubular ceramic insulator 94 is the ground electrode. The corona pre-ionizer 92 of the present invention need not use a ceramic insulator that is tubular in shape. Other shapes of ceramic insulators may be used, e.g., a flat disk. Similarly, perforated electrodes rather than a helical wire may be used in the present invention.

The present invention, in addition to reducing the sources of contamination of the laser gases and the optical surfaces within the pressure vessel 12, also provides window assemblies 102 for the optical windows of the laser cavity that result in far fewer replacements of the windows. The dismounting and changing of optical components 104 after they have degraded involves the removal and filling of the laser cavity with the toxic laser gases. With the present invention, the window assembly 102 for holding the optical component 104 at each end of the laser cavity provides the capability of rotating the optical component 104 so that different portions of the optical component 104 can be presented to the laser beam generated in the pressure vessel 12 between the first and second laser discharge electrodes 34 and 38 without dismounting assembly 102 and consequently without removing and refilling the pressure vessel 12 with the laser gases.

A preferred embodiment of a window assembly 102 in which the optical component 104 is rotatable to place different portions of the optical component 104 into the path of the laser beam will now be described with respect to FIGURES 5 and 6. An annular sleeve 106 having an interior shoulder 108 is provided for mounting the optical component 104. The optical component 104 and the interior diameters of the sleeve 106 above and below the shoulder 108 are sized so that the optical component 104 abuts and O-ring 110 disposed in a groove 112 on shoulder 108, the lateral movement of optical component 104 being restricted by sleeve 106. An annular ring 114 with a hexagonal periphery is secured over the peripheral edge of the optical component 104 by bolts 116 so that the optical component 104 is securely held between shoulder 108 of sleeve 106 and annular ring 114. Each optical component 104 is oversized, having an area sufficient to accommodate several non-overlapping laser beams. Completely different portions of the optical component 104 may therefore be successfully interposed into the path of the laser beam.

The annular sleeve 106 is provided with a flange 118 for holding window mount 120 between the sleeve 106 and annular ring 114. The window mount 120 is of annular configuration and has a circumferential notch 121 along its inside at the beginning of mounting flange 122 that accommodates flange 118 of sleeve 106. In addition, the inside cylindrical surface of window mount 120 is sized to slide over the outside surface of sleeve 106 and to seal thereagainst by means of quadrings 126 formed of Viton (Registered Trade Mark) disposed in circumferential grooves 128 located on the outside of the sleeve 106. Window mount 120 is slipped over sleeve 106 prior to the securing of annular ring 114 by bolts 116 to annular sleeve 106. Window mount 120 and the secured sleeve 106 and ring 114 holding optical component 104 are thereby rotatably secured together, the Viton rings 126 allowing rotation while providing sealing. Bolts through bores 130 in mounting flange 122 on the window assembly 102 to an end plate 22 or 24 over an opening therein so that a portion of the optical component 104, not including the center portion, is presented to the laser beam 134. The portions of the window assemblies 102 that are in contact with the laser gases, with the exception of the optical components 104, are virtually entirely metal or ceramic, as are the portions of other components of the excimer laser of the present invention that are exposed to the laser gases. Preferably these portions are nickel or high purity alumina.

The portion of the optical component 104 presented to the laser beam 134 may be changed by rotating the annular ring 114 by its hexagonal periphery and thereby the optical component 104. It will be appreciated that there are many other configurations and arrangements that may be used in order to provide an optical component for each end of an excimer laser that is rotatable to place a different portion of the optical component into the path of the beam without the necessity for removing the window.

The foregoing description has been of certain presently preferred embodiments of the present invention. It will be appreciated by those skilled in the art that there are many modifications and variations of these described embodiments that remain within the scope of the present invention as claimed.

## Claims

1. An excimer laser in which a gas containing a halide is contained in a pressure vessel (12) containing first and second electrodes (34, 38) for creating a laser discharge between the electrodes and generating a laser beam between first and second optical components (104) at opposite ends of the pressure vessel, a fan (44) for circulating the gas, and a heat exchanger (42) for cooling the gas; wherein the portions of the pressure vessel, first and second electrodes, fan and heat exchanger that are in contact with the gas containing a halide are fabricated entirely of only metal or ceramic, such that contamination of the gas by said pressure vessel, first and second electrodes, fan and heat exchanger is minimized and the lifetime of the excimer laser is increased, characterised in that said first optical component on which the laser beam impinges is sized substantially larger than the beam's cross-section, and mounting means are provided for selectively rotating the optical component relative to the laser beam and fixing a selected portion of the optical component in the beam's path, such that any portions of the optical component carrying undesired deposits of light-absorbing particles may be selectively moved out of the beam's path.

2. An excimer laser as defined in Claim 1, and further including a pre-ionizer (92) located within said pressure vessel, for ionizing a portion of the gas containing a halide contained therein, wherein all portions of the pre-ionizer that are in contact with the gas containing a halide are fabricated entirely of either metal or ceramic.

3. An excimer laser as defined in Claim 1 and further comprising:
a fan shaft (46) upon which said fan rotates extending through said pressure vessel;
a bearing (58) located external to said pressure vessel supporting said fan shaft;
a magnetic fluid seal (56) surrounding said fan shaft and separating the inside of said pressure vessel from said bearing, to prevent the gas containing a halide within said pressure vessel from contacting said bearing and any lubrication associated with said bearing; and
an enclosure (54) located over said bearing and the portion of said fan shaft extending through said pressure vessel and over the side of said magnetic fluid seal facing said bearing, to prevent the escape of gas containing a halide to the atmosphere if said magnetic fluid seal fails and the gas containing a halide from said pressure vessel enters said enclosure.

4. An excimer laser as defined in Claim 3, and further comprising a magnetic coupling for rotating said shaft, said magnetic coupling including:
an inner magnetic coupling portion (70) attached to said fan shaft;
an outer magnetic coupling portion (76); and
a drive shaft (80) attached to said outer magnetic coupling portion and located external to said pressure vessel and said enclosure and coaxial with said fan shaft, said outer magnetic coupling portion being located in magnetic flux coupling proximity to said inner magnetic coupling portion so that said magnetic coupling causes said fan shaft to rotate when said drive shaft is rotated.

5. An excimer laser as defined in Claim 1, wherein each of said first and second optical components (104) is rotatable and sized so that a succession of non-overlapping portions of said optical component may be selectively fixed in the path of the laser beam.

6. An excimer laser as defined in Claim 5, and further including a window assembly (102) for carrying each of said optical components (104), each window assembly comprising:
a first annular member (106) for carrying said optical component;
a second annular member (120) concentric with said first annular member for sealing attachment to said pressure vessel; and
means (114, 118, 126, 128) for rotatably and sealingly securing said first and second annular members so that said first annular member may be rotated with respect to said second annular member while maintaining a seal between said first and second annular members.

7. An excimer laser as defined in any preceding claim, wherein:
the first optical component is a window (104); and there is further provided
a first annular member (106) for carrying said first optical component,
a second annular member (120) concentric with said first annular member for sealing attachment to said pressure vessel, and
means (114, 118, 126, 128) for rotatably and sealingly securing said first and second annular members so that said first annular member may be rotated with respect to said second annular member while maintaining a seal between said first and second annular members.

8. An excimer laser as defined in any preceding claim wherein the metal and ceramic are nickel and high purity alumina.

9. A method for using an excimer laser that includes a pressure vessel (12) containing a gas containing a halide, first and second electrodes (34, 38) located within the pressure vessel for exciting the gas located therebetween and generating a laser discharge, first and second optical means (102) located at opposite ends of the pressure vessel, aligned with the space between the first and second electrodes (34, 38), for generating a laser beam therebetween, a fan (44) for circulating the gases, and a heat exchanger (42) for cooling the gases, wherein the portions of the pressure vessel (12), first and second electrodes (34, 38), fan (44) and heat exchanger (42) that are in contact with the gas containing a halide are fabricated entirely of only metal or ceramic such that contamination of the gas by said pressure vessel, first and second electrodes, fan and heat exchanger is minimized and the lifetime of the excimer laser is increased; wherein the first optical means (102) includes an optical component (104) on which the laser beam impinges that is laterally rotatable relative to the beam, the method comprising steps of:
operating the excimer laser such that, after a period of operation, a film of light-absorptive particles is deposited on the optical component (104) of the first optical means (102), with a denser film being deposited on the portion of the optical component on which the laser beam impinges; and
selectively rotating the optical component (104) of the first optical means (102) laterally relative to the laser beam, to bring a portion of the optical component carrying a less dense deposited film into alignment with the beam.

10. A method as defined in Claim 9, wherein:
the optical component (104) of the first optical means (102) is a window;
the first optical means further includes
a first annular member (106) for carrying said optical component,
a second annular member (120) concentric with said first annular member for sealing attachments to said pressure vessel, and
means (114, 118, 126, 128) for rotatably and sealingly securing said first and second annular members (106, 120) so that said first annular member (106) may be rotated with respect to said second annular member (120) while maintaining a seal between said first and second annular members; and
the step of selectively rotating the optical component (104) of the first optical means (102) includes a step of rotating the first annular member (106).

11. A method as defined in Claim 10, wherein the second optical means (102) includes
a window (104) on which the laser beam impinges, the window being sized greater than the beam cross-section and being laterally rotatable relative to the beam, wherein operation of the excimer laser, after a period of time, deposits a film of light-absorptive particles on the window (104) of the second optical means (102), with a denser film being deposited on the portion of the window on which the laser beam impinges,
a first annular member (106) for carrying said window (104),
a second annular member (120) concentric with said first annular member (106) for sealing attachment to said pressure vessel (12), and means (114, 118, 126, 128) for rotatably and sealingly securing said first and second annular members so that said first annular member (106) may be rotated with respect to said second annular member (120) while maintaining a seal between said first and second annular members; and
the method further includes a step of selectively rotating the first annular member (106) of the second optical means (102) relative to the second annular member (120) of the second optical means, to bring a portion of the window (104) carried by the first annular member (106) carrying a less dense deposited film into alignment with the beam.

## Patentansprüche

1. Excimer-Laser, in dem ein Gas mit einem Halogenid in einem Druckbehälter (12) enthalten ist, mit einer ersten und einer zweiten Elektrode (34, 38) zum Erzeugen einer Laserentladung zwischen den Elektroden und zum Erzeugen eines Laserstrahls zwischen ersten und zweiten optischen Komponenten (104) an gegenüberliegenden Enden des Druckbehälters, mit einem Ventilator (44) zum Zirkulieren des Gases und mit einem Wärmetauscher (42) zum Kühlen des Gases, wobei die Bereiche des Druckbehälters, erste und zweite Elektrode, Ventilator und Wärmetauscher, die in Kontakt mit dem ein Halogenid enthaltendes Gas sind, vollständig aus Reinmetall oder Keramik hergestellt sind, so daß die Verunreinigung des Gases durch den Druckbehälter, erste und zweite Elektrode, Ventilator und Wärmetauscher minimiert ist, und die Lebensdauer des Excimer-Lasers erhöht ist, **dadurch gekennzeichnet,** daß die erste optische Komponente, auf die der Laserstrahl auftrifft, im wesentlichen größer als der Strahlenquerschnitt bemessen ist und daß Befestigungsmittel vorgesehen sind, um die optische Komponente gegenüber dem Laserstrahl selektiv zu drehen und um einen ausgewählten Bereich der optischen Komponente in dem Strahlenpfad so zu fixieren, daß jegliche Bereiche der optischen Komponente, die nerwünschte Ablagerungen lichtabsorbierender Partikel tragen, selektiv aus dem Strahlenpfad bewegt werden können.

2. Excimer-Laser nach Anspruch 1, der außerdem einen Vorionisierer (92) aufweist, der in dem Druckbehälter angeordnet ist, um einen Bereich des darin enthaltenen ein Halogenid enthaltenden Gases zu ionisieren, dadurch gekennzeichnet, daß alle Bereiche des Vorionisierers, die in Kontakt mit dem ein Halogenid enthaltendes Gas sind, vollständig aus Metall oder Keramik hergestellt, sind.

3. Excimer-Laser nach Anspruch 1, dadurch gekennzeichnet, daß er folgendes aufweist: eine Ventilatorwelle (46), auf der sich der durch den Druckbehälter erstreckende Ventilator dreht; ein die Ventilatorwelle haltendes Lager (58), das außerhalb des Druckbehälters angeordnet ist; eine magnetische Fluid-Dichtung (56), die die Ventilatorwelle umgibt und die Innenseite des Druckbehälters vom Lager trennt, um zu verhindern, daß das ein Halogenid enthaltendes Gas innerhalb des Druckbehälters mit dem Lager oder jeder dem Lager zugeordneten Schmierung in Kontakt kommt; und eine Ummantelung (54), die über dem Lager und dem Bereich der sich durch den Druckbehälter erstreckenden Ventilatorwelle und über der dem Lager zugewandten Seite der magnetischen Fluid-Dichtung angeordnet ist, um das Entweichen von ein Halogenid enthaltendes Gas in die Atmosphäre zu verhindern, wenn die magnetische Fluid-Dichtung versagt und das ein Halogenid enthaltendes Gas aus dem Druckbehälter in die Ummantelung einströmt.

4. Excimer-Laser nach Anspruch 3, dadurch gekennzeichnet, daß eine magnetische Kupplung zum Drehen der Welle vorgesehen ist und daß die magnetische Kupplung folgendes aufweist:
einen inneren magnetischen Kupplungsbereich (70), der an der Ventilatorwelle befestigt ist;
einen äußeren magnetischen Kupplungsbereich (76); und
eine Antriebswelle (80), die an dem äußeren magnetischen Kupplungsbereich befestigt ist und außerhalb des Druckbehälters und der Ummantelung und koaxial zur Ventilatorwelle angeordnet ist, wobei der äußere magnetische Kupplungsbereich in Nahkopplung des magnetischen Flusses im inneren magnetischen Kupplungsbereich angeordnet ist, so daß die magnetische Kopplung die Ventilatorwelle zum Drehen bringt, wenn die Antriebswelle gedreht wird.

5. Excimer-Laser nach Anspruch 1, dadurch gekennzeichnet, daß sowohl die erste als auch die zweite optische Komponente (104) drehbar ist und so bemessen ist, daß eine Folge von nicht überlappenden Bereichen der optischen Komponente im Pfad des Laserstrahls wahlweise befestigbar ist.

6. Excimer-Laser nach Anspruch 5, gekennzeichnet durch eine Fensteranordnung (102) zum Tragen jeder der optischen Komponenten (104), wobei jede Fensteranordnung folgendes aufweist:
ein erstes ringförmiges Bauteil (106) zum Tragen der optischen Komponente;
ein zweites mit dem ersten ringförmigen Bauteil konzentrisches ringförmiges Bauteil (120) als Dichtungsverbindung zum Druckbehälter; und
Mittel (114, 118, 126, 128) zum drehbaren und dichtenden Befestigen des ersten und des zweiten ringförmigen Bauteils (106, 120), so daß das erste ringförmige Bauteil (106) gegenüber dem zweiten ringförmigen Bauteil (120) gedreht werden kann, während die Dichtheit zwischen dem ersten und zweiten ringförmigen Bauteil erhalten bleibt.

7. Excimer-Laser nach einem der vorhergehenden Ansprüche, dadurch gekennzeichnet, daß
die erste optische Komponente ein Fenster (104) ist; und daß zusätzlich folgendes vorgesehen ist:
ein erstes ringförmiges Bauteil (106) zum Tragen der ersten optischen Komponente,
ein zweites mit dem ersten ringförmigen Bauteil konzentrisches ringförmiges Bauteil (120) als Dichtungsverbindung zum Druckbehälter und
Mittel (114, 118, 126, 128) zum drehbaren und dichtenden Befestigen des ersten und zweiten ringförmigen Bauteils, so daß das erste ringförmige Bauteil bezüglich des zweiten ringförmigen Bauteils gedreht werden kann, während die Dichtheit zwischen dem ersten und zweiten ringförmigen Bauteil erhalten bleibt.

8. Excimer-Laser nach einem der vorhergehenden Ansprüche, dadurch gekennzeichnet, daß das Metall und die Keramik Nickel und hochreines Aluminiumoxid sind.

9. Verfahren zum Verwenden eines Excimer-Lasers mit einem ein Gas mit einem Halogenid enthaltenden Druckbehälter (12), mit einer ersten und einer zweiten Elektrode (34, 38), die im Druckbehälter zum Anregen des sich dazwischen befindenden Gases angeordnet sind und eine Laserentladung erzeugen, mit ersten und zweiten an gegenüberliegenden Enden des Druckbehälters angeordneten optischen Mitteln (102), die auf den Raum zwischen der ersten und zweiten Elektrode (34, 38) ausgerichtet sind, um einen Laserstrahl dazwischen zu erzeugen, mit einem Ventilator (44) zum Zirkulieren der Gase und mit einem Wärmetauscher (42) zum Kühlen der Gase, wobei die Bereiche des Druckbehälters (12), erste und zweite Elektrode (34, 38), Ventilator (44) und Wärmetauscher (42), die in Kontakt mit dem ein Halogenoid enthaltendes Gas sind, vollständig aus Reinmetall oder Keramik hergestellt sind, so daß eine Verunreinigung des Gases durch den Druckbehälter, erste und zweite Elektrode, Ventilator und Wärmetauscher minimiert sind und die Lebensdauer des Excimer-Lasers erhöht wird; wobei die ersten optischen Mittel (102) eine optische Komponente (104), auf die der Laserstrahl auftrifft, beinhaltet, die gegenüber dem Strahl quer drehbar ist, dadurch gekennzeichnet, daß das Verfahren folgende Schritte aufweist:
Betreiben des Laserstrahls so, daß nach einer Betriebsdauer ein Film mit lichtabsorbierenden Partikeln auf der optischen Komponente (104) der ersten optischen Mittel (102) abgelagert ist, wobei ein dichterer Film auf dem Bereich der optischen Komponente abgelagert wird, auf den der Laserstrahl auftrifft; und
wahlweises Drehen der optischen Komponente (104) der ersten optischen Mittel (102) quer bezüglich des Laserstrahls, um einen Bereich der optischen Komponente, die einen weniger dicht abgelagerten Film trägt, in Ausrichtung mit dem Strahl zu bringen.

10. Verfahren nach Anspruch 9, dadurch gekennzeichnet, daß die optische Komponente (104) des ersten optischen Mittels (102) ein Fenster ist, und daß das erste optische Mittel außerdem folgendes aufweisen:
ein erstes ringförmiges Bauteil (106) zum Tragen der optischen Komponente,
ein zweites mit dem ersten ringförmigen Bauteil konzentrisches ringförmiges Bauteil (120) als Dichtungsverbindung zum Druckbehälter, und
Mittel (114, 118, 126, 128) zum drehbaren und dichtenden Befestigen des ersten und des zweiten ringförmigen Bauteils (106, 120) aufweist, so daß das erste ringförmige Bauteil (106) bezüglich des zweiten ringförmigen Bauteil (120) gedreht werden kann, während die Dichtheit zwischen dem ersten und dem zweiten ringförmigen Bauteil erhalten bleibt; und
daß der Schritt des wahlweise Drehens der optischen Komponente (104) des ersten optischen Mittels (102) einen Schritt des Drehens des ersten ringförmigen Bauteils (106) beinhaltet.

11. Verfahren nach Anspruch 10, wobei das zweite optische Mittel (102) folgendes aufweist:
ein Fenster (104), auf das der Laserstrahl auftrifft, wobei das Fenster größer als der Strahlenquerschnitt dimensioniert ist und bezüglich des Strahls quer drehbar ist, wobei der Betrieb des Excimer-Lasers nach einer Zeitdauer einen Film mit lichtabsorbierenden Partikeln auf dem Fenster (104) des zweiten optischen Mittels (102) ablagert, wobei ein dichterer Film auf den Bereich des Fensters, auf den der Laserstrahl auftrifft, abgelagert wird,
ein erstes ringförmiges Bauteil (106) zum Tragen des Fensters (104),
ein zweites mit dem ersten ringförmigen Bauteil (106) konzentrischen ringförmigen Bauteil (120) als Dichtungsverbindung zum Druckbehälter (12) und Mittel (114, 118, 126, 128) zum drehbaren und dichtenden Befestigen des ersten und zweiten ringförmigen Bauteils, so daß das erste ringförmige Bauteil (106) bezüglich des zweiten ringförmigen Bauteils (120) gedreht werden kann, während die Dichtheit zwischen dem ersten und zweiten ringförmigen Bauteil erhalten bleibt; dadurch gekennzeichnet, daß das Verfahren außerdem einen Schritt des wahlweise Drehens des ersten ringförmigen Bauteils (106) des zweiten optischen Mittels (102) relativ zu dem zweiten ringförmigen Bauteils (120) des zweiten optischen Mittels beinhaltet, um einen Bereich des durch das erste ringförmige Bauteil (106) getragenen Fensters (104), der einen weniger dicht abgelagerten Film trägt, in Ausrichtung mit dem Strahl zu bringen.

## Revendications

1. Laser excimère dans lequel un gaz contenant un halogénure est contenu dans un réservoir sous pression (12) contenant une première et une seconde électrodes (34, 38) pour provoquer une décharge laser entre les électrodes et produire un faisceau laser entre des premier et second composants optiques (104) au niveau des extrémités opposées du réservoir sous pression, un ventilateur (44) servant à faire circuler le gaz et un échangeur de chaleur (42) servant à refroidir le gaz, et dans lequel les parties du réservoir sous pression, des première et seconde électrodes, du ventilateur et de l'échangeur de chaleur, qui sont en contact avec le gaz contenant un halogénure, sont réalisées entièrement en métal ou en céramique de façon à minimiser la contamination du gaz par lesdits réservoir sous pression, première et seconde électrodes, ventilateur et échangeur de chaleur, et de façon à allonger la durée de vie du laser excimère, caractérisé en ce que ledit premier composant optique avec lequel le faisceau laser entre en contact est dimensionné de façon nettement plus importante que la section transversale du faisceau, et en ce qu'un élément de monture est prévu pour faire tourner de façon sélective le composant optique par rapport au faisceau laser et pour fixer une partie sélectionnée du composant optique dans le passage du faisceau, de telle façon que toute partie du composant optique portant des dépôts inopportuns de particules absorbant la lumière, puisse être déplacée de façon sélective en dehors du passage du faisceau.

2. Laser excimère selon la revendication 1, comprenant en outre un pré-ioniseur (92) situé à l'intérieur dudit réservoir sous pression et servant à ioniser une partie du gaz contenant un halogénure qui est contenue dans le réservoir sous pression, et dans lequel toutes les parties du pré-ioniseur qui sont en contact avec le gaz contenant un halogénure sont réalisées entièrement soit en métal soit en céramique.

3. Laser excimère selon la revendication 1, comprenant en outre :
- un arbre de ventilateur (46) sur lequel tourne ledit ventilateur s'étendant à travers ledit réservoir sous pression;
- un palier (58) situé à l'extérieur dudit réservoir sous pression et supportant ledit arbre de ventilateur;
- un joint fluide magnétique (56) entourant ledit arbre de ventilateur et séparant l'intérieur dudit réservoir sous pression dudit palier afin d'empêcher le gaz contenant un halogénure qui est contenu dans ledit réservoir sous pression d'entrer en contact avec ledit palier et avec tout organe de lubrification associé audit palier; et
- une enceinte (54) située sur ledit palier et la partie dudit arbre de ventilateur s'étendant à travers le réservoir sous pression et sur le côté dudit joint fluide magnétique faisant face audit palier, afin d'empêcher le gaz contenant un halogénure de s'échapper dans l'atmosphère en cas de défaillance dudit joint fluide magnétique et en cas d'intrusion, dans ladite enceinte et depuis ledit réservoir sous pression, du gaz contenant un halogénure.

4. Laser excimère selon la revendication 3, comprenant en outre un accouplement magnétique servant à faire tourner ledit arbre, ledit accouplement magnétique comportant :
- une partie d'accouplement magnétique intérieure (70) solidaire dudit arbre de ventilateur;
- une partie d'accouplement magnétique extérieure (76); et
- un arbre d'entraînement (80) solidaire de ladite partie d'accouplement magnétique extérieure, disposé à l'extérieur dudit réservoir sous pression et de ladite enceinte et de façon coaxiale par rapport audit arbre de ventilateur, ladite partie d'accouplement magnétique extérieure étant disposée dans un état de proximité de couplage par flux magnétique par rapport à ladite partie d'accouplement magnétique intérieure, de telle façon que ledit accouplement magnétique provoque la rotation dudit arbre de ventilateur quand ledit arbre d'entraînement est mis en rotation.

5. Laser excimère selon la revendication 1, dans lequel chacun desdits premier et second composants optiques (104) peut tourner et est dimensionné de façon à ce qu'une succession de parties, qui ne se chevauchent pas, dudit composant optique puissent être fixées de façon sélective dans le passage du faisceau laser.

6. Laser excimère selon la revendication 5, comprenant en outre un ensemble de fenêtre (102) pour supporter chacun desdits composants optiques (104), chaque ensemble de fenêtre comportant :
- un premier élément annulaire (106) servant à supporter ledit composant optique;
- un second élément annulaire (120) concentrique par rapport audit premier élément annulaire, et destiné à assurer une fixation étanche sur ledit réservoir sous pression;
- des moyens (114, 118, 126, 128) pour fixer, de manière étanche et tournante, lesdits premier et second éléments annulaires de telle façon que ledit premier élément annulaire puisse être mis en rotation par rapport audit second élément annulaire tout en maintenant l'étanchéité entre ledit premier élément annulaire et ledit second élément annulaire.

7. Laser excimère selon l'une quelconque des revendications précédentes, dans lequel le premier composant optique est une fenêtre (104); et où on trouve également :
- un premier élément annulaire (106) servant à supporter ledit premier composant optique,
- un second élément annulaire (120) concentrique par rapport audit premier élément annulaire et servant à assurer une fixation étanche sur ledit réservoir sous pression,
- des moyens (114, 118, 126, 128) pour fixer, de manière étanche et tournante, lesdits premier et second éléments annulaires de telle façon que ledit premier élément annulaire puisse être mis en rotation par rapport audit second élément annulaire tout en maintenant l'étanchéité entre ledit premier élément annulaire et ledit second élément annulaire.

8. Laser excimère selon l'une quelconque des revendications précédentes, dans lequel le métal et la céramique sont respectivement du nickel et de l'alumine de grande pureté.

9. Procédé d'utilisation d'un laser excimère qui comprend un réservoir sous pression (12) contenant un gaz contenant un halogénure, une première et une seconde électrodes (34, 38) situées à l'intérieur du réservoir sous pression pour exciter le gaz qui est situé entre les deux électrodes et pour produire une décharge laser, un premier et un second moyens optiques (102), disposés aux extrémités opposées du réservoir sous pression et alignés avec l'espace séparant les première et seconde électrodes (34, 38), pour produire une faisceau laser entre les deux électrodes, un ventilateur (44) pour faire circuler le gaz et un échangeur de chaleur (42) pour refroidir le gaz, dans lequel les parties du réservoir sous pression (12), des première et seconde électrodes (34, 38), du ventilateur (44) et de l'échangeur de chaleur (42), qui sont en contact avec le gaz contenant un halogénure, sont réalisées entièrement en métal ou en céramique, de façon à minimiser la contamination du gaz par lesdits réservoir sous pression, première et seconde électrodes, ventilateur et échangeur de chaleur, et de façon à allonger la durée de vie du laser excimère, et dans lequel ledit premier moyen optique (102) comprend un composant optique (104) avec lequel le faisceau laser entre en contact et qui peut tourner latéralement par rapport au faisceau, ledit procédé comprenant les étapes suivantes :
- utilisation du laser excimère de telle façon que, après une période de fonctionnement, une pellicule de particules absorbant la lumière se dépose sur le composant optique (104) du premier moyen optique (102), avec une pellicule plus dense déposée sur la partie du composant optique avec laquelle le faisceau laser entre en contact;
- mise en rotation sélective du composant optique (104) du premier moyen optique (102) , latéralement par rapport au faisceau laser, afin d'amener en alignement avec ledit faisceau une partie du composant optique qui comporte une pellicule déposée moins dense.

10. Procédé selon la revendication 9, dans lequel:
- le composant optique (104) du premier moyen optique (102) est une fenêtre;
- ledit premier moyen optique comprend également:
. un premier élément annulaire (106) servant à supporter ledit composant optique,
. un second élément annulaire (120), concentrique par rapport au premier élément annulaire, servant à assurer une fixation étanche sur ledit réservoir de pression,
. des moyens (114, 118, 126, 128) pour fixer, de façon tournante et étanche, lesdits premier et second éléments annulaires (106, 120) de telle façon que ledit premier élément annulaire (106) puisse être mis en rotation par rapport audit second élément annulaire (120) tout en maintenant l'étanchéité entre lesdits premier et second éléments annulaires;
- l'étape de mise en rotation sélective du composant optique (104) du premier moyen optique (102) comprend une étape de mise en rotation du premier élément annulaire (106).

11. Procédé selon la revendication 10, dans lequel le second moyen optique (102) comprend :
. une fenêtre (104) avec laquelle le faisceau laser entre en contact, la fenêtre présentant une dimension supérieure à la section transversale du faisceau et pouvant tourner latéralement par rapport audit faisceau, avec un fonctionnement du laser excimère tel qu'après une période de temps, on réalise un dépôt de particules absorbant la lumière sur la fenêtre (104) du second moyen optique (102), avec une pellicule plus dense déposée sur la partie de la fenêtre avec laquelle le faisceau laser entre en contact;
. un premier élément annulaire (106) servant à supporter ladite fenêtre (104);
. un second élément annulaire (120) concentrique par rapport audit premier élément annulaire (106), servant à assurer une fixation étanche sur ledit réservoir sous pression (12), et des moyens (114, 118, 126, 128) pour fixer, de façon tournante et étanche, lesdits premier et second éléments annulaires de telle façon que ledit premier élément annulaire (106) puisse être mis en rotation par rapport audit second élément annulaire (120) tout en maintenant l'étanchéité entre lesdits premier et second éléments annulaires;
- le procédé comprend également une étape de mise en rotation, de façon sélective, du premier élément annulaire (106) du second moyen optique (102) par rapport au second élément annulaire (120) du second moyen optique, pour amener en alignement avec le faisceau une partie de la fenêtre (104) portée par le premier élément annulaire (106) et portant une pellicule déposée moins dense.
